# EUROPEAN PATENT APPLICATION

(11) **EP 0 569 321 A1**
(43) Date of publication of application: **10.11.1993**
(21) Application number: 93650017.2
(22) Date of filing: 05.05.1993
(51) Int. Cl.: A01C 23/00

(54) **Apparatus and method for distributing acidified slurry**

(30) Priority: 06.05.1992 IE 921455
(71) Applicant: TEAGASC, THE AGRICULTURE AND FOOD DEVELOPMENT AUTHORITY, Dublin 4 (IE)
(72) Inventor: Lenehan, James, Bennelkerry, Co Carlow (IE); Carton, Owen, New Ross, Co Wexford (IE); Stevens, James, Lisburn, Co Antrim BT28 2EG, N. Ireland (GB)
(74) Representative: Hanna, Peter William Derek

(57) **Abstract**

Apparatus for distributing acidified animal slurry waste to an application site comprises a vessel (1) for containing untreated slurry, a tank (2) for containing an acid solution such as nitric acid, a mixing unit (5) located outside the vessel for mixing the slurry and acid just prior to spreading the slurry. A pump (3) propels a separate stream of untreated slurry from the vessel (1) and of the acid solution (4) from the tank (2) to the mixing unit (5), which is preferably a static mixer. The acidified slurry mixture (8) produced by the mixing unit is then spread on the application site preferably by a band spreader, with the aim of reducing ammonia volatilization, increasing nitrogen concentration, and to some extent reducing odour and atmospheric pollution.

## Description

The present invention relates to apparatus and a method of producing and distributing acidified slurry, i.e. liquid animal wastes.

It is known that the effective nutrient content of slurry as a fertilizer for plant growth in respect of nitrogen-containing components is greatly reduced due to the loss of nitrogen by volatilisation of ammonia as the slurry lies on the soil surface. As well as reducing the quantity of nitrogen available, the evolution of ammonia constitutes an atmospheric pollution problem. One method of reducing volatilisation is to inject the slurry below the surface of the soil. While this is effective, it is only suitable for certain soil types. Acidification of slurry is also known to reduce ammonia volatilisation considerably, however slurry acidified during storage or in batches may suffer from dentrification and/or insufficient mixing. The amounts of H₂S evolved during acidification in relatively confined areas also pose a health risk.

With regard to distribution of slurry it is found that the conventional method using a slurry stream directed against a splash plate leads to uneven lateral distribution which is undesirable, while the injection method mentioned above does not suit all soil types. In order to achieve the full potential benefit of the nutrients contained in slurry, the material must be applied evenly and at the appropriate rate for the requirements of the crop.

It is an object of the present invention to provide a method of producing and applying acidified slurry which substantially reduces or overcomes the problems of volatilisation and uneven application. It is a further object of the invention to provide apparatus for effecting such a method.

Acidified slurry is produced according to the present invention by independently introducing streams of slurry and acid into a mixing area and effecting mixing, such that mixing occurs just prior to application of the mixture to an application site while still ensuring complete mixing of the constituents.

This process lowers ammonia emissions. It also ensures that the H₂S given off by the mixture is evolved over a large ventilated area i.e. the area upon which is slurry is distributed, instead of in confined areas as is the case in acidification during storage in a tank, for example. Thus, atmospheric pollution and bad odour problems are substantially reduced.

Typically the slurry and acid are mixed in amounts sufficient to reduce the slurry pH to about 5.5.

Any acid may be suitable but nitric acid is preferred due to its nitrogen content. If nitric acid is used the nutrient value of the slurry is enhanced by the addition of extra available nitrogen.

According to the present invention, apparatus for distributing acidified slurry to an application site is characterized by -
a vessel for containing untreated slurry;
a tank for containing an acid solution;
a mixing unit for mixing the slurry and acid;
means for propelling a stream of untreated slurry from the vessel and of the acid solution from the tank to the mixing unit; and
means for applying the acidified slurry mixture produced by the mixing unit to the application site.

The acid is preferably nitric acid. The mixing unit preferably comprises a static mixer.

The apparatus preferably includes an onboard water tank to provide a supply of rinsing water.

The means for applying the acidified slurry to the application site is preferably a band spreader, which distributes slurry in discrete bands on the surface of the ground from a plurality of regularly spaced hose outlets fixed on a transverse boom to the rear of the apparatus.

A preferred method of producing acidified slurry prior to distribution to an application site is characterized by the following steps:
a stream of acid solution from a containment tank is introduced into a static mixer unit;
simultaneously a stream of untreated slurry is introduced into the mixing unit from a vessel by means of an overpressure in the vessel or by a pump;
the two streams are mixed thoroughly by passage through the mixer unit and propelled to a distribution means.

Preferably, the said acid solution stream is regulated by a positive displacement pump.

The invention will now be described with reference to the accompanying drawings, in which:

Figure 1 is a schematic representation of an acidification system for use with a transportable slurry tanker.

Figure 2 is a block diagram of a preferred embodiment of the acidification method and apparatus.

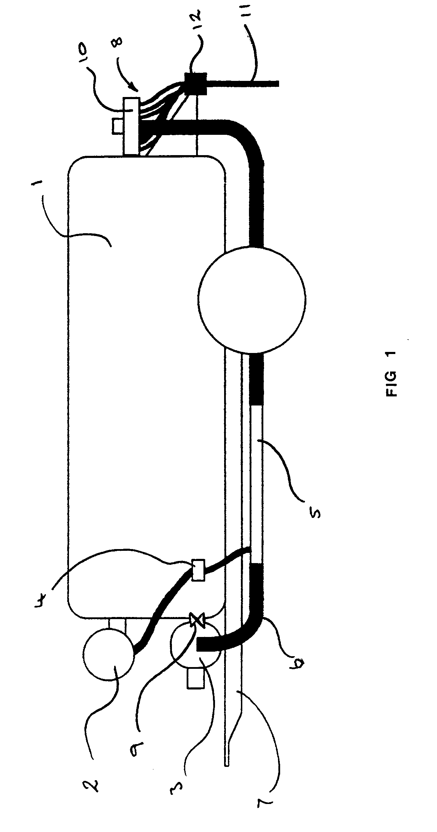

With reference to Figure 1, a tank 1 for containing the slurry is mounted on a mobile support frame 7 which is typically drawn behind a towing vehicle such as a tractor (not shown). A conduit 6 leads from the tank 1 to a band spreader 8 located on the rear of the apparatus, via a mixing unit 5. A secondary tank 2 containing acid is located adjacent the tank 1 and is connected to the mixing unit 5 via an acid pump 4. The mixing unit is preferably a static mixer of the type comprising a pipe section enclosing baffle plates, for example, a KOFLO (Trade Mark) static mixer.

A slurry pump 3, such as a positive displacement pump, may be provided to pump slurry from the tank 1 to the spreader 8 or alternatively the tank may be a conventional vacuum tank which uses an overpressure to expel the slurry.

Acid solution is introduced to the mixer 5 via pump 4 which is preferably a hydraulically-driven positive displacement pump, and the slurry is thus acidified by the action of the mixer 5. The acidified slurry continues through the conduit 6 to the band spreader 8 at which stage it is distributed as required. The rate of acid addition is automatically controlled and adjusts to differences in slurry flow rate in order to uniform acidity of the slurry, at the desired level.

In operation, a stream of slurry from the tank 1 is propelled through the conduit 6 to the mixing unit 5. The volume of the slurry stream is determined by the application rate (m³/ha) selected by the operator, the working width of the spreading means and the forward speed of the machine. Both the acid pump 4 and the slurry pump 3 may be driven by hydraulic motors, the speed of which is varied by electronically-controlled proportional valves. Thus, the acid to slurry ratio may be controlled.

The operator selects the required target application rate and spreading width on an auto-control unit located in the cab of the towing vehicle. The output of the slurry pump 3 (also governed by the control unit) reacts to any change in forward speed, which is measured for example by a sensor wheel of the mobile support frame 7, to keep the application rate constant.

Where a hydraulically-driven positive displacement pump is used to propel the slurry from the tank 1 the pump operation may be controlled using a proportional hydraulic valve. Where a mechanically driven slurry pump is used, an appropriate speed can be selected to produce the required application rate, or alternatively a by-pass valve can be used to divert excess flow back to the tank 1. In the case of a vacuum tank 1 using an overpressure to expel the slurry a flow-restricting valve may be used to control the flow. In the case of a by-pass valve with a slurry pump or a flow-restricting valve with the overpressure system, a means of monitoring the flow rate may be used to provide a control signal for the valve.

The means for applying the acidified slurry to the application site is most preferably a band spreader, which distributes slurry in discrete bands on the surface of the ground. Treated or acidified slurry is fed from the vessel 1 to a control distribution unit 10 which distributes the slurry to individual hose outlets 11 secured to a transverse boom 12. Preferably the boom is mounted at the rear of the vessel 1. The outlets 11 are regularly spaced to give an even controllable spread.

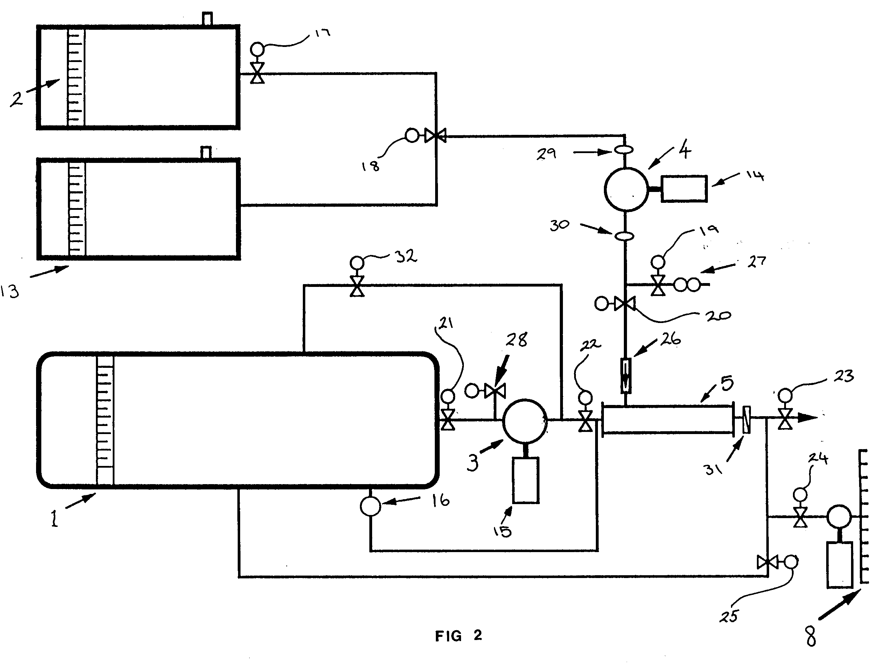

With reference now to Figure 2, which shows a preferred embodiment of the invention, a water tank 13 is also provided in order to provide a supply of water for rinsing the system after use. Valves 17, 18 control the flow of acid and water respectively. A quick release coupling 27 operated in conjunction with valves 19, 20 provides means for filling the acid tank 2. A scroll and stator positive displacement pump 4 is operated by a motor 14 and pressure sensors 29 and 30 are provided on the acid line to monitor the flow of acid therethrough. With valves 17, 18 and 20 in the correct positions and valve 19 closed acid flows from the acid tank 2 through the pump 4 and the one way valve 26 into the mixer 5.

The slurry tank 1 has a slurry inlet controlled by valves 28 and 32. A rupture disc 16 between the slurry tank 1 and the mixer 5 is provided as a safety mechanism, so that in the event of a blockage occurring in the mixer or a dangerous build up of pressure the rupture disc 16 will rupture allowing slurry to return to the slurry tank 1. Preferably, a pre-fill mascerator is provided (not shown) to reduce in size any solid matter in the slurry. With valves 21 and 22 in the open position and valves 28 and 32 in the closed position slurry flows from the slurry tank 1 through a rotary piston pump 3 driven by motor 15 into the mixer 5 where it is mixed with the acid. A slurry flow sensor 31 monitors the flow of acidified slurry flowing out of the mixer 5. A valve 23 is provided to control output of the acidified slurry to an outlet connection (not shown) which may if desired be connected to a splash plate distributor. Alternatively, with valve 23 in the closed position the acidified slurry reaches the band spreader 8 via the valve 24. Valve 25 provides another return line to the slurry tank 1.

As mentioned above, the speed of the pumps is preferably electronically controlled to ensure that the correct application rate is maintained. An auto-control unit may be used to ensure safe operation of machine functions. The auto-control unit typically includes a programmable logic controller (PLC) to facilitate the operation of pumps and valves in the required sequence. The auto-control unit ensures that the acidification process can be safely accomplished by the operator from the cab of the towing vehicle. The operator selects a particular program, e.g. slurry acidification and application, then simply initiates the program by activating the PLC. The PLC operates the relevant valves and motors, in the correct sequence and direction, to carry out the task. When the slurry application is completed a single stop control is activated and the PLC shuts down the system in the correct sequence to ensure safe operation. In addition to monitoring the status of the valves and motors during operation, sensors for monitoring slurry flow, acid levels and acid line pressure may also be incorporated.

It is found that the even and uniform application required to produce the full potential benefit of the nutrients in the slurry is achieved by using apparatus of the present invention in which the application rate of slurry is regulated in accordance with forward speed, and capabilities of the spreading unit. Since the slurry is acidified in a controlled manner just prior to its distribution minimum losses due to ammonia volatilisation are achieved. A bandspreader is preferred because it distributes treated slurry in discrete bands at say 300mm centres with greater eveness of lateral spread than a conventional splash plate spreader. Grass can become contaminated by slurry if spread too thickly or if poor slurry to soil contact results from splashing, and therefore an even controlled spreading rate is very important.

Additives including, for example, trace elements, masking or deodourizing agents may be introduced in addition to the acid prior to mixing with the slurry.

## Claims

1. Apparatus for distributing acidified slurry to an application site characterized by-
a vessel (1) for containing untreated slurry;
a tank (2) for containing an acid solution;
a mixing unit (5) for mixing the slurry and acid;
means for propelling a stream of untreated slurry (3) from the vessel (1) and of the acid solution (4) from the tank (2) to the mixing unit (5); and
means for applying the acidified slurry mixture (8) produced by the mixing unit to the application site.

2. Apparatus according to claim 1 in which the acid is nitric acid.

3. Apparatus according to claim 2 in which the mixing unit (5) comprises a static mixer.

4. Apparatus according to claim 3 including an onboard water tank (13) to provide a supply of rinsing water.

5. Apparatus according to claim 4 in which the vessel (1) is a vacuum tank and the means for propelling the untreated slurry from the vessel is the application of overpressure in the vessel.

6. Apparatus according to claim 4 in which the means for propelling the untreated slurry from the vessel is a pump (3).

7. Apparatus according to claim 1 in which the means for applying the acidified slurry comprises a band spreader (8).

8. Apparatus according to claim 7 in which the band spreader is adapted to distribute slurry in discrete bands on the surface of the ground from a plurality of regularly spaced hose outlets (11) fixed on a transverse boom (12) to the rear of the apparatus.

9. A method of producing acidified slurry prior to distribution to an application site characterized by the following steps:
a stream of acid solution from a containment tank (2) is introduced into a static mixer unit (5);
simultaneously a stream of untreated slurry is introduced into the mixing unit (5) from a vessel (1) by means of an overpressure in the vessel or by a pump;
the two streams are mixed thoroughly by passage through the mixer unit (5) and propelled to a distribution means (8).

10. A method according to claim 9 in which the acid is nitric acid.
